# EUROPEAN PATENT APPLICATION

(11) **EP 4 796 321 A1**
(43) Date of publication of application: **26.08.2026**
(21) Application number: 25833306.1
(22) Date of filing: 27.06.2025
(51) Int. Cl.: B32B 27/20, B32B 27/28, B32B 27/30, B32B 9/04, B32B 9/00, B32B 7/027, B32B 25/20, B32B 25/08, B32B 37/10, H01M 10/658

(54) **AEROGEL COMPOSITE MATERIAL, HEAT-RESISTANT PAD COMPRISING SAME, AND METHOD FOR MANUFACTURING HEAT-RESISTANT PAD**

(30) Priority: 01.07.2024 KR 20240086361; 26.06.2025 KR 20250085474
(71) Applicant: LG Energy Solution, Ltd., Seoul 07335 (KR)
(72) Inventor: KIM, Minjune, Daejeon 34122 (KR); JEONG, Jaehoon, Daejeon 34122 (KR); LEE, Jegwon, Daejeon 34122 (KR); KIM, Minpyo, Daejeon 34122 (KR)
(74) Representative: Plasseraud IP
(86) International application number: PCT/KR2025/009046
(87) International publication number: WO 2026/010247

(57) **Abstract**

The present disclosure provides a method for producing a heat resistant pad, comprising the steps of: mixing a fluorine-based resin and an aerogel particle in a solid state at a weight ratio of 1:1 or more and 1:1.5 or less to form an aerogel composite; and forming the aerogel composite into a sheet to form a thermal insulation layer.

## Description

### TECHNICAL FIELD

### Cross-Reference to Related Application(s)

This application claims priority to and the benefit of Korean Patent Application no. 10-2024-0086361, filed on July 1, 2024, and Korean Patent Application no. 10-2025-0085474, filed on June 26, 2025, the disclosures of which are hereby incorporated by reference in their entirety

The present disclosure relates to an aerogel composite, a heat resistant pad comprising the same, and a method for producing the heat resistant pad, and more particularly, to a method for producing a heat resistant pad including a method for producing the heat resistant pad including an aerogel by a dry process.

### BACKGROUND

Along with the technology development and increased demand for mobile devices, demand for secondary batteries as energy sources has been increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

A battery cell of a secondary battery is produced by incorporating an electrode assembly together with an electrolyte in a secondary battery case, and the electrode assembly is produced by stacking and/or winding a positive electrode, a separator, and a negative electrode. The produced battery cells are stacked in a plurality of numbers to form a battery module or a battery pack.

By the drive of the cell, heat may be generated in a battery cell, and if the heat is transferred to adjacent battery cells and accumulated, battery thermal propagation may occur.

In order to prevent such problems, many studies have been conducted into the prevention of ignition inside the battery pack by placing a heat resistant pad between battery cells. In particular, studies have been pursued into a heat resistant pad having superior heat resistance and high production efficiency.

### DETAILED DESCRIPTION OF THE INVENTION

### Technical Problem

The present disclosure has been designed to solve the above problems, and an object thereof is to provide a method for producing a thermal insulation layer comprising an aerogel composite by a dry process, and a heat resistant pad comprising the thermal insulation layer.

Another object of the present disclosure is to provide an aerogel composite, and a heat resistant pad comprising a thermal insulation layer comprising the same.

### Technical Solution

According to an aspect of the present disclosure, there is provided a method for producing a heat resistant pad, comprising the steps of: mixing a fluorine-based resin and an aerogel particle in a solid state at a weight ratio of 1:1 or more and 1:1.5 or less to form an aerogel composite; and forming the aerogel composite into a sheet to form a thermal insulation layer.

In one embodiment, the forming an aerogel composite is performed in one step.

In one embodiment, the forming an aerogel composite may comprise a first step of mixing a ceramic particle and the fluorine-based resin in a solid state to form a precursor; and a second step of mixing the precursor and the aerogel particle in a solid state to form the aerogel composite.

In one embodiment, in the first step, a mixing weight ratio of the ceramic particle and the fluorine-based resin may be 2:1 or more and 9:1 or less.

In one embodiment, the first step may be a step of mixing the ceramic particle and the fluorine-based resin while applying a shear stress.

In one embodiment, the second step may be a step of kneading and mixing the precursor and the aerogel particle.

In one embodiment, the ceramic particle may comprise one or more selected from the group consisting of silicon oxide, a zirconium-based oxide, an yttrium-based oxide, aluminum oxide(Al₂O₃), boehmite, aluminum trihydrate, calcium oxide, a phosphate-based oxide, phosphorus pentoxide (P₂O₅), a glass fiber, a glass bubble, and a chopped glass.

In one embodiment, the fluorine-based resin may comprise one or more selected from the group consisting of a polytetrafluoroethylene(PTFE) resin, a polyfluoroalkoxy(PFA) resin, and a polyvinylidene fluoride (PVDF) resin.

In one embodiment, the aerogel particle may comprise a silica aerogel particle.

In one embodiment, the forming the aerogel composite into a sheet may be pressing the aerogel composite.

In one embodiment, a thermal conductivity of the thermal insulation layer may be 0.02 W/m·K or more and 0.1 W/m·K or less.

In one embodiment, the method further comprises forming a supporting layer on at least one surface of the thermal insulation layer, wherein the supporting layer may comprise one or more selected from the group consisting of a silicone-based resin, an aramid fiber, a spun yarn, a mica pad, and a mica paper.

In one embodiment, the silicone-based resin may be a silicone rubber.

According to another aspect of the present disclosure, there is provided an aerogel composite comprising a fluorine-based resin and an aerogel particle in a weight ratio of 1:1 or more and 1:1.5 or less.

In one embodiment, the aerogel particle may comprise a silica aerogel particle.

In one embodiment, the fluorine-based resin may comprise one or more selected from the group consisting of a polytetrafluoroethylene(PTFE) resin, a polyfluoroalkoxy(PFA) resin, and a polyvinylidene fluoride(PVDF) resin.

In one embodiment, the aerogel composite may further comprise a ceramic particle.

In one embodiment, a mixing weight ratio of the ceramic particle and the fluorine-based resin may be 2:1 or more and 9:1 or less.

In one embodiment, the ceramic particle may comprise one or more selected from the group consisting of silicon oxide, a zirconium-based oxide, an yttrium-based oxide, aluminum oxide(Al₂O₃), boehmite, aluminum trihydrate, calcium oxide, a phosphate-based oxide, phosphorus pentoxide (P₂O₅), a glass fiber, a glass bubble, and a chopped glass.

According to yet another aspect of the present disclosure, there is provided a heat resistant pad comprising a thermal insulation layer comprising the above-mentioned aerogel composite.

### Advantageous Effects

The present disclosure can provide a method for producing a heat resistant pad having a high cost competitiveness and a high process efficiency by producing a thermal insulation layer comprising an aerogel composite by a dry process.

Furthermore, the present disclosure can provide an aerogel composite produced by the above-mentioned method and a heat resistant pad comprising the same.

### BRIEF DESCRIPTION OF THE DRAWINGS

FIG. 1 is a photograph of the aerogel composite produced in Example 1.
FIG. 2 is a SEM image of the aerogel composite produced in Example 1.
FIG. 3 is a SEM image of the aerogel composite produced in Example 1.
FIG. 4 is a photograph of the aerogel composite produced in Example 2.
FIG. 5 is a SEM image of the aerogel composite produced in Example 2.
FIG. 6 is a SEM image of the aerogel composite produced in Example 2.
FIG. 7 is a SEM image of the aerogel composite produced in Example 3.
FIG. 8 is a SEM image of the aerogel composite produced in Example 3.
FIG. 9 is an image of the thermal insulation layer produced in Example 3.
FIG. 10 is an image of the heat resistant pad produced in Example 3.
FIG. 11 is an SEM image of the mixture of fluorine-based resin and aerogel particle produced in Comparative Example 1.
FIG. 12 is an image of the mixture of ceramic particles, fluorine-based resin and aerogel particles produced in Comparative Example 2.
FIG. 13 is an image of the mixture of ceramic particles, fluorine-based resin and aerogel particles produced in Comparative Example 3.
FIG. 14 is an SEM image of the mixture of FIG. 13.
FIG. 15 is an image of the mixture of ceramic particles, fluorine-based resin and aerogel particles produced in Comparative Example 4.
FIG. 16 is an SEM image of the mixture of FIG. 15.
FIG. 17 is an image of the mixture of fluorine-based resin and aerogel particle produced in Comparative Example 5.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Now, an aerogel composite, a heat resistant pad comprising the same, and a method for producing the heat resistant pad according to the present disclosure will be described.

A method for producing a heat resistant pad according to the present disclosure comprises the steps of:
mixing a fluorine-based resin and an aerogel particle in a solid state at a weight ratio of 1:1 or more and 1:1.5 or less to form an aerogel composite; and
forming the aerogel composite into a sheet to form a thermal insulation layer.

The method for producing a heat resistant pad according to the present disclosure relates to a method for producing a heat resistant pad including a thermal insulation layer, and the heat resistant pad produced by the method for producing a heat resistant pad of the present disclosure may include only a thermal insulation layer, or may further include a supporting layer disposed on at least one surface of the thermal insulation layer. Embodiments of such a method for producing a heat resistant pad will be described in detail below.

The method for producing a heat resistant pad according to one embodiment comprises a step of mixing a fluorine-based resin and an aerogel particle in a solid state at a weight ratio of 1:1 or more and 1:1.5 or less to form an aerogel composite, and a step of forming the aerogel composite into a sheet to form a thermal insulation layer.

In one embodiment, the step of forming an aerogel composite may be performed in one step. That is, the step of forming an aerogel composite may be a step of mixing powdery fluorine-based resin and powdery aerogel particle in a solid state.

The mixing may be performed using a device capable of applying a shear stress, for example, a household blender or the like.

In one embodiment, the fluorine-based resin may comprise one or more selected from the group consisting of a polytetrafluoroethylene(PTFE) resin, a polyfluoroalkoxy(PFA) resin, and a polyvinylidene fluoride(PVDF) resin. For example, a polytetrafluoroethylene (PTFE) resin may be used as the fluorine-based resin, but the embodiments are not limited thereto.

In one embodiment, the aerogel particle may be an inorganic aerogel particle, specifically a silica aerogel particle. Aerogel particles have superior thermal insulation properties and thus are used as a major component in the production of a thermal insulation layer.

The fluorine-based resin and the aerogel particle are provided in a powder state and mixed in a solid state. That is, the fluorine-based resin and the aerogel particle are mixed in a dry state without a separate solvent.

Generally, a wet production process of an aerogel composite takes about 1 to 3 days to grow an aerogel precursor on the surface of a supporting body such as a glass fiber, and subsequently requires a process of selectively removing the solvent in the aerogel precursor using a method such as a supercritical fluid method or a room temperature pressurization method, which results in high process costs. In contrast, the present disclosure has an advantage that because the aerogel composite is formed by dry mixing the fluorine-based resin and the aerogel particles, the process time is within 10 minutes, the process is simpler than a wet production process, and the time and cost consumed in the process are relatively short.

The fluorine-based resin and the aerogel particle can be mixed in a weight ratio of fluorine-based resin: aerogel particle of 1:1 or more and 1:1.5 or less. When the amount of aerogel particles decreases and the weight ratio of the fluorine-based resin and the aerogel particle (fluorine-based resin weight: aerogel particle weight) is less than 1:1, pad formation of the aerogel composite may be difficult, or even if the aerogel composite and the thermal insulation layer can be produced, it may be difficult for the produced thermal insulation layer to exhibit sufficient thermal insulation effects. When the amount of aerogel particles increases and the weight ratio of the fluorine-based resin and the aerogel particle (fluorine-based resin weight: aerogel particle weight) exceeds 1:1.5, the amount of the fluorine-based resin, which serves as a web connecting the aerogel particles, relatively decreases, so that pad formation of the aerogel composite may be difficult. In other words, it is difficult to produce the thermal insulation layer.

In the present disclosure, a fluorine-based resin and an aerogel particle are mixed in a solid state at a weight ratio of 1:1 or more and 1:1.5 or less to form an aerogel composite, thereby providing a dry production method for an aerogel composite, and providing an aerogel composite that is highly price-competitive, has superior thermal insulation properties, and is easily formed into a pad.

The aerogel composite formed as above can be formed into a sheet and produced as a thermal insulation layer. Forming the aerogel composite into a sheet is a step of pressing the aerogel composite and forming it into a sheet. The pressing can be performed by a known method, such as calendaring.

In one embodiment, when the step of forming the aerogel composite is performed in one step, it can include a step of mixing a fluorine-based resin and an aerogel particle in a solid state at a weight ratio of 1:1 or more and 1:1.5 or less to form an aerogel composite, and a step of forming the aerogel composite into a sheet to form a thermal insulation layer.

In another embodiment, the step of forming an aerogel composite may be performed in two or more steps, for example, in a two-step.

In one embodiment, the step of forming an aerogel composite may include a first step of mixing a ceramic particle and the fluorine-based resin in a solid state to form a precursor, and a second step of mixing the precursor and the aerogel particle in a solid state to form the aerogel composite.

The first step is a step of mixing powdery ceramic particle and powdery fluorine-based resin in a solid state to form a precursor.

The first step is a process for fiberizing the fluorine-based resin. By mixing ceramic particles into the fluorine-based resin, it is possible to more easily induce fiberization of the fluorine-based resin. The first step can be performed using a device capable of applying a shear stress, for example, a household blender or the like. The mixing of the ceramic particle and the fluorine-based resin is performed without a separate solvent, that is, it is performed by a dry process. Therefore, the time consumed on the process is short and the cost is relatively low.

In the present embodiment, the ceramic particle and the fluorine-based resin may be mixed at a weight ratio of ceramic particles: fluorine-based resin of 2:1 or more and 9:1 or less. When the above ratio is satisfied, it is possible to easily fiberize the fluorine-based resin.

In one embodiment, the ceramic particle may include one or more selected from the group consisting of silicon oxide, a zirconium-based oxide, an yttrium-based oxide, aluminum oxide(Al₂O₃), boehmite, aluminum trihydrate, calcium oxide, a phosphate-based oxide, phosphorus pentoxide (P₂O₅), a glass fiber, a glass bubble, and a chopped glass. For example, milled glass fiber, chopped glass, silicon oxide, zirconium oxide, or aluminum oxide which are processed into ceramic particles may be used, and more specifically, milled glass fibers and chopped glass can be mixed and used, but the embodiments are not limited thereto.

The description of the fluorine-based resin is applicable in the same manner as previously described.

The second step is a step of mixing the precursor formed in the first step with the aerogel particle in a solid state to form an aerogel composite. The description of the aerogel particles is applicable in the same manner as previously described.

The mixing of the precursor and the aerogel particle is performed by a dry process without a separate solvent. Therefore, the time consumed on the process is short and the cost is relatively low.

When mixing the precursor and the aerogel particle, they may be mixed based on the weight ratio of the fluorine-based resin contained in the precursor and the aerogel particle. That is, the precursor and the aerogel particle are mixed so that the weight ratio of the fluorine-based resin contained in the precursor: aerogel particle satisfies 1:1 or more and 1:1.5 or less. When the above ratio is satisfied, it is possible to easily fiberize the fluorine-based resin.

The second step may be performed by kneading the precursor produced in the first step and aerogel particles. For example, the process of kneading the precursor and aerogel particles may be performed using a PD mixer (planetary disperser mixer) or a twin screw extruder.

In the present embodiment, if the first and second steps are performed in one step, that is, if the ceramic particle, fluorine-based resin, and aerogel particle are mixed simultaneously in a solid state, a problem of cracking of the aerogel particles may occur. Due to such particle cracking, the specific surface area of the aerogel particle increases, and the ratio of the fluorine-based resin that can cover the surface of the aerogel particle becomes relatively low, and pad formation of the aerogel composite may not be performed.

Therefore, when the ceramic particle is added, the aerogel composite is formed by dividing the whole into the first and second steps as described above, and then the thermal insulation layer may be formed by forming the aerogel composite into a sheet. The sheet formation of the aerogel composite can be performed by the press method as described above.

In the method for producing a heat resistant pad according to the present disclosure, a fluorine-based resin, an aerogel particle and optionally a ceramic particle are mixed in a solid state to form an aerogel composite, and the aerogel composite may be formed into a sheet to produce a thermal insulation layer.

A thermal conductivity of the thermal insulation layer may be 0.02 W/m·K or more and 0.1 W/m·K or less. The thermal insulation layer of the present disclosure includes an aerogel particle, and therefore has superior heat resistance and is produced by a dry process, which can reduce the time and cost of the process compared to the wet process.

On the other hand, the method for producing a heat resistant pad according to one embodiment may provide a method for producing a thermal insulation layer. That is, the heat resistant pad produced according to a method for producing a heat resistant pad according to one embodiment may provide the aforementioned thermal insulation layer.

The method for producing a heat resistant pad according to another embodiment of the present disclosure may include a step of forming a thermal insulation layer and a step of forming a supporting layer. That is, the heat resistant pad produced according to the method for producing a heat resistant pad according to one embodiment may include a thermal insulation layer and a supporting layer disposed on at least one surface of the thermal insulation layer.

The step of forming the thermal insulation layer is the same as the method for producing the thermal insulation layer described above. That is, the step of forming the thermal insulation layer is performed by a step of forming an aerogel composite in one step or two steps as described above, and a step of forming the aerogel composite into a sheet to form a thermal insulation layer. A detailed description thereof will be omitted.

The step of forming the supporting layer is a step of forming a supporting layer on at least one surface of the thermal insulation layer. For example, the supporting layer may be formed on both surfaces of the thermal insulation layer, but the embodiments are not limited thereto.

The supporting layer may include a heat resistant material. Specifically, the supporting layer may include one or more selected from the group consisting of a silicone-based resin, a fabric, and a ceramic material, and the silicone-based resin may be, for example, a silicone rubber. The fabric may be, for example, an aramid fiber or a spun yarn. The ceramic material may be, for example, a mica pad or a mica paper. That is, the supporting layer may include one or more selected from the group consisting of a silicone-based resin, an aramid fiber, a spun yarn, a mica pad, and a mica paper.

In one embodiment, the supporting layer may be a silicone rubber. In this case, the supporting layer may be formed by applying and curing a silicone rubber solution on at least one surface of the thermal insulation layer. However, the embodiments of the supporting layer are not limited thereto.

In one embodiment, the supporting layer is made of a silicone rubber as an adhesive layer, and may further include one or more selected from the group consisting of a fabric or ceramic material. In this case, a silicone rubber solution may be applied to at least one surface of the thermal insulation layer, a fabric or ceramic material may be adhered onto the silicone rubber solution, and then the silicone rubber solution may be cured to form a supporting layer.

The method for producing a heat resistant pad according to one embodiment may provide a method of providing a heat resistant pad including a thermal insulation layer and a supporting layer. The heat resistant pad provided thereby can further improve its strength and flexibility. Such a heat resistant pad may be disposed, for example, between battery cells to prevent heat generated from one battery cell from being transferred to and accumulated in adjacent battery cells, resulting in thermal runaway.

The aerogel composite of the present disclosure comprises a fluorine-based resin and an aerogel particle in a weight ratio of 1:1 or more and 1:1.5 or less.

In one embodiment, the aerogel composite may be produced according to the step of forming the aerogel composite in the method for producing the heat resistant pad described above. That is, the aerogel composite of one embodiment may be formed by mixing the fluorine-based resin and the aerogel particle in a solid state at a weight ratio of 1:1 or more and 1:1.5 or less. Therefore, the details of the fluorine-based resin and the aerogel particles in the aerogel composite of the present disclosure are applicable in the same manner as previously described.

In one embodiment, the aerogel particle may include a silica aerogel particle.

In further embodiment, the fluorine-based resin may include one or more selected from the group consisting of a polytetrafluoroethylene(PTFE) resin, a polyfluoroalkoxy(PFA) resin, and a polyvinylidene fluoride(PVDF) resin.

In one embodiment, the aerogel composite may further include ceramic particles in order to more easily induce fiberization of the fluorine-based resin. That is, the aerogel composite of one embodiment may be formed by a first step of mixing a ceramic particle and the fluorine-based resin in a solid state to form a precursor, and a second step of mixing the precursor and the aerogel particle in a solid state to form the aerogel composite. Therefore, the details of the ceramic particles in the aerogel composite of the present disclosure are applicable in the same manner as previously described.

In one embodiment, the mixing weight ratio of the ceramic particle and the fluorine-based resin may be 2:1 or more and 9:1 or less. Additionally, in one embodiment, the ceramic particle may include one or more selected from the group consisting of silicon oxide, a zirconium-based oxide, an yttrium-based oxide, aluminum oxide(Al₂O₃), boehmite, aluminum trihydrate, calcium oxide, a phosphate-based oxide, phosphorus pentoxide (P₂O₅), a glass fiber, a glass bubble, and a chopped glass.

The aerogel composite of the present disclosure includes a fluorine-based resin and an aerogel particle at a weight ratio of 1:1 or more and 1:1.5 or less, and thus has superior thermal insulation properties, enables ease formation of a sheet, and has superior processability.

The heat resistant pad of the present disclosure includes a thermal insulation layer including the aerogel composite.

In one embodiment, the heat resistant pad includes a thermal insulation layer including the above-mentioned aerogel composite. Specifically, the thermal insulation layer may be formed by forming the above-mentioned aerogel composite into a sheet. With regard to the method of sheet formation, the contents described in the step of forming a thermal insulation layer by forming the aerogel composite into a sheet in the above-mentioned method for producing the heat resistant pad can be applied similarly.

In further embodiment, the heat resistant pad of the present disclosure may include a thermal insulation layer and a supporting layer disposed on at least one surface of the thermal insulation layer. The details of the supporting layer are applicable in the same manner as previously described.

The heat resistant pad of the present disclosure includes a thermal insulation layer including an aerogel composite and thus can exhibit superior heat resistance. In addition, the heat resistant pad of the present disclosure includes a supporting layer in addition to the thermal insulation layer and thus can improve flexibility.

Hereinafter, embodiments of the present disclosure will be described in detail so that those skilled in the art can easily carry out the present disclosure. However, the present disclosure can be modified in various different forms and is not limited to the embodiments described herein.

### <Example 1>

Fluorine-based resin and aerogel particles were mixed in a solid state at a weight ratio of 1:1 to form an aerogel composite. PTFE was used as the fluorine-based resin, and silica aerogel particles were used as the aerogel particles. Mixing was performed at 3500 rpm using a household blender for 15 minutes.

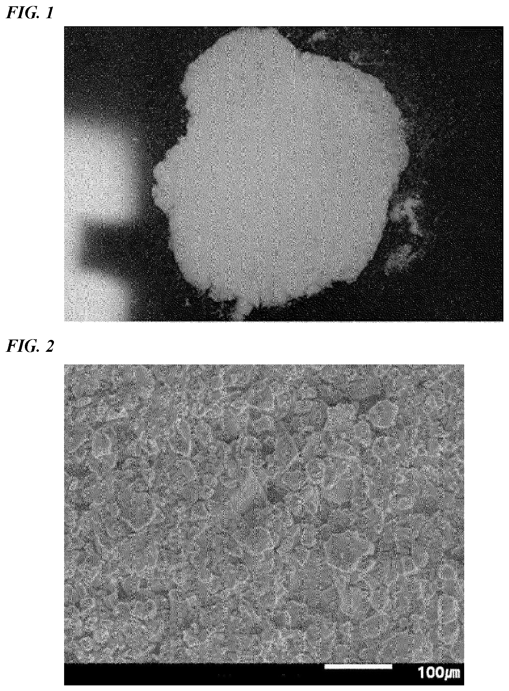

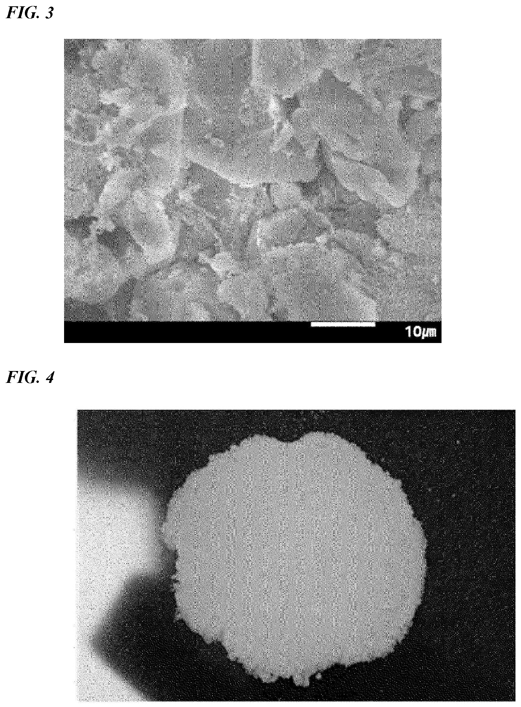

FIG. 1 is a photograph of the aerogel composite produced in Example 1. FIGS. 2 and 3 are SEM images of the aerogel composite produced in Example 1. Referring to FIGS. 1 to 3, it can be confirmed that the fluorine-based resin was adsorbed on the surface of the aerogel particles, and the aerogel particles were uniformly bonded to each other by the fluorine-based resin.

### <Example 2>

The fluorine-based resin and the aerogel particles were mixed in a solid state at a weight ratio of 1:1.5 to form an aerogel composite. PTFE was used as the fluorine-based resin, and silica aerogel particles were used as the aerogel particles. The mixing was performed at 3500 rpm using a household blender for 15 minutes.

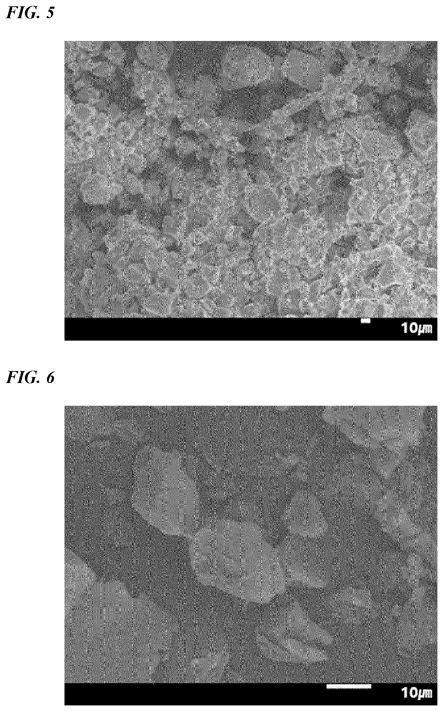

FIG. 4 is a photograph of the aerogel composite produced in Example 2. FIGS. 5 and 6 are SEM images of the aerogel composite produced in Example 2.

Referring to FIGS. 4 to 6, it can be confirmed that the fluorine-based resin was adsorbed on the surface of the aerogel particles, and thus the aerogel particles are uniformly connected and bonded to each other.

### <Example 3>

Ceramic particles and fluorine-based resin were mixed in a solid state at a weight ratio of 2:1 to form a precursor. Aluminum oxide (Al₂O₃) was used as the ceramic particles, and PTFE was used as the fluorine-based resin. The mixing was performed at 3500 rpm using a household blender for 15 minutes.

The precursor thus formed was mixed with aerogel particles in a solid state to form an aerogel composite. At this time, the aerogel particles were mixed with the fluorine-based resin contained in the precursor at a weight ratio of 1:1. Silica aerogel particles were used as the aerogel particles. Mixing was performed by mixing at 45 rpm using a HIVIS Mix (planetary mixer) available from PRIMIX Corporation for 45 minutes.

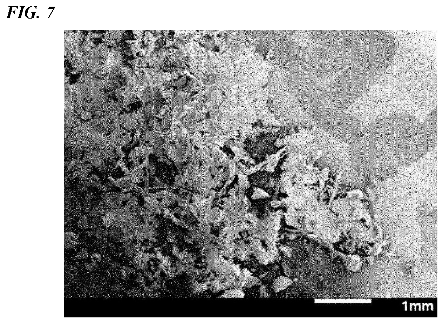

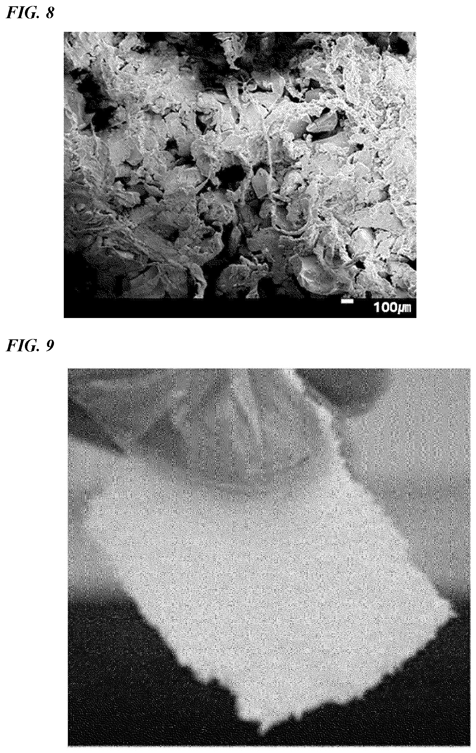

FIGS. 7 and 8 are SEM images of the aerogel composite produced in Example 3. Referring to FIGS. 7 and 8, it can be confirmed that the precursor, which is a mixture of ceramic particles and fluorine-based resin, exists in a network shape and covers the aerogel.

Subsequently, the aerogel composite material thus formed was pressed using an air automatic hot press (air heating plate tester, QM940AS model) available from QMESYS Corp. and formed into a sheet to form a thermal insulation layer. FIG. 9 is an image of the thermal insulation layer produced in Example 3. Referring to FIG. 9, it can be confirmed that the thermal insulation layer has a sheet shape.

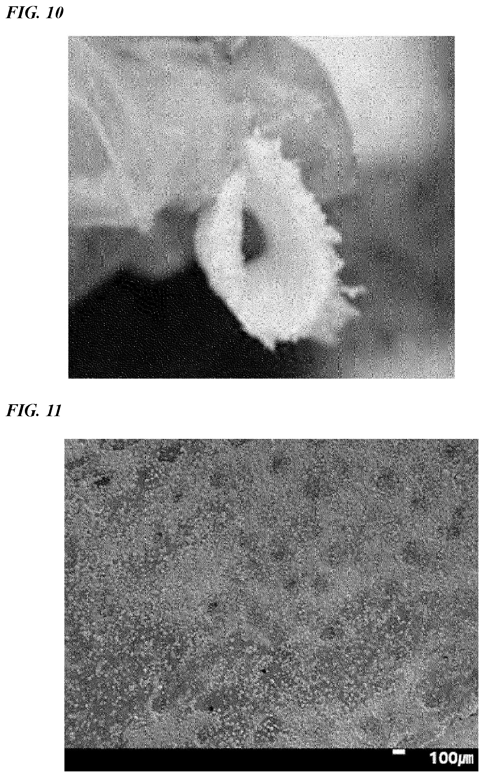

Subsequently, the silicone-based rubber solution was spray-coated on both surfaces of the formed thermal insulation layer and thermally cured to form a supporting layer. The silicone rubber solution was a mixture of PDMS(polydimethylsiloxane), a crosslinker, and a platinum(Pt) catalyst in a weight ratio of PDMS: crosslinker: platinum catalyst = 100:1:1. Thermal curing was performed in an oven at 80°C for 10 minutes. Thereby, a heat resistant pad including a thermal insulation layer and a supporting layer was produced. FIG. 10 is an image of the heat resistant pad produced in Example 3. Referring to FIG. 10, it can be confirmed that the heat resistant pad is bent in one direction including the supporting layer. In other words, it can be confirmed that the heat resistant pad includes the supporting layer and thus further enhance its flexibility.

### <Comparative Example 1>

An attempt was made to mix a fluorine-based resin and an aerogel particle in a solid state at a weight ratio of 1:5 to form an aerogel composite. PTFE was used as the fluorine-based resin, and silica aerogel particles were used as the aerogel particles. Mixing was performed at 3500 rpm using a household blender for 15 minutes.

FIG. 11 is an SEM image of the mixture of fluorine-based resin and aerogel particle produced in Comparative Example 1. As shown in FIG. 11, in Comparative Example 1, the fluorine-based resin and aerogel were not mixed, and thus an aerogel composite was not formed. The reason is expected to be because the amount of fluorine-based resin per unit volume was small compared to Examples 1 and 2, making it difficult to form a web through fiberization.

As the aerogel composite was not formed, it was impossible to produce a thermal insulation layer, and therefore impossible to produce a heat resistant pad.

### <Comparative Example 2>

Ceramic particles, fluorine-based resin, and aerogel particles were mixed in a solid state at a weight ratio of 2:1:4, and were mixed simultaneously in one step. Aluminum oxide(Al₂O₃) was used as the ceramic particles, PTFE was used as the fluorine-based resin, and silica aerogel particles were used as the aerogel particles.

Mixing was performed at 3500 rpm using a household blender for 15 minutes.

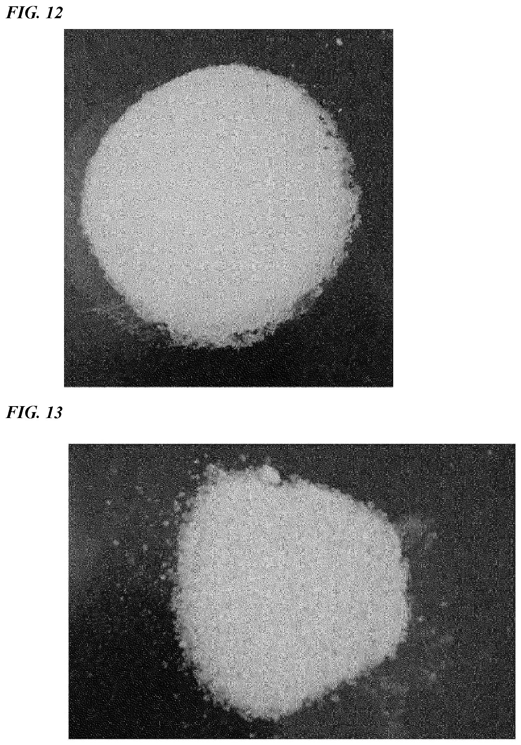

FIG. 12 is an image of the mixture of ceramic particles, fluorine-based resin and aerogel particles produced in Comparative Example 2.

Referring to FIG. 12, the mixture was not formed into a pad, and SEM analysis was impossible due to dust.

### <Comparative Example 3>

Ceramic particles and fluorine-based resin were mixed in a solid state at a weight ratio of 1:1 to form a precursor. Aluminum oxide(Al₂O₃) was used as the ceramic particles, and PTFE was used as the fluorine-based resin. Mixing was performed at 3500 rpm using a household blender for 15 minutes.

The precursor thus formed was mixed with aerogel particles in a solid state to form an aerogel composite. At this time, the aerogel particles were mixed in an amount of four times the weight of the fluorine-based resin contained in the precursor. Silica aerogel particles were used as the aerogel particles. Mixing was performed at 45 rpm using a HIVIS Mix (planetary mixer) available from PRIMIX Corporation for 45 minutes.

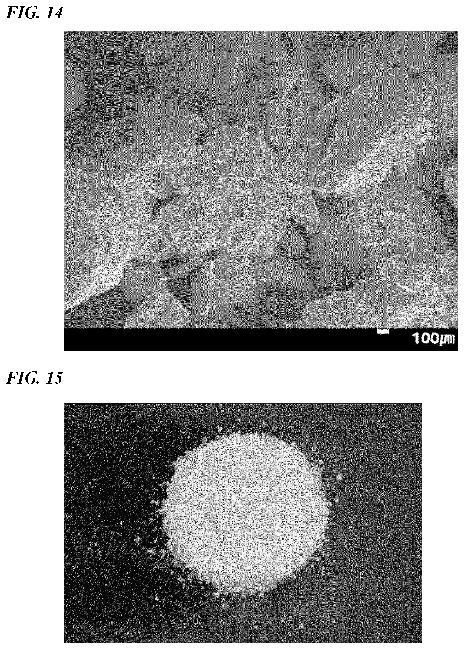

FIG. 13 is an image of the mixture of ceramic particles, fluorine-based resin and aerogel particles produced in Comparative Example 3. FIG. 14 is an SEM image of the mixture of FIG. 13.

Referring to Fig. 13, it can be confirmed that the aerogel composite is not formed and the mixture exists in powder form. Referring to FIG. 14, it can be confirmed that since the ratio of aerogel particles to the precursor is relatively high, only some of the aerogel particles formed a complex with the precursor, and that there are more aerogel particles that did not form a complex with the precursor.

### <Comparative Example 4>

Ceramic particles and fluorine-based resin were mixed in a solid state at a weight ratio of 10:1 to form a precursor. Aluminum oxide(Al₂O₃) was used as the ceramic particles, and PTFE was used as the fluorine-based resin. Mixing was performed at 3500 rpm using a household blender for 15 minutes.

The precursor thus formed was mixed in a solid state with aerogel particles to form an aerogel composite. At this time, the aerogel particles were mixed in an amount of four times the weight of the fluorine-based resin contained in the precursor. Silica aerogel particles were used as the aerogel particles. Mixing was performed at 45 rpm using a HIVIS Mix (planetary mixer) available from PRIMIX Corporation for 45 minutes.

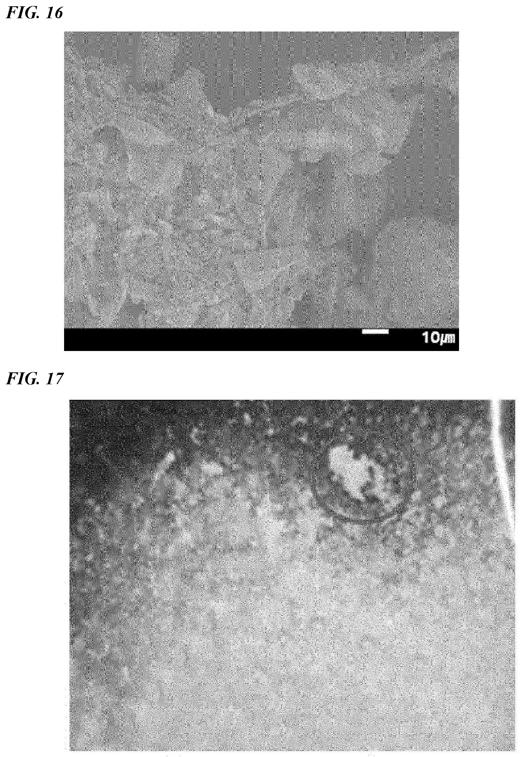

FIG. 15 is an image of the mixture of ceramic particles, fluorine-based resin and aerogel particles produced in Comparative Example 4. FIG. 16 is an SEM image of the mixture of FIG. 15.

Referring to FIG. 15, it can be confirmed that the aerogel composite is not formed and the mixture exists in a powder form. Further, referring to FIG. 16, it can be confirmed that the ceramic particles are densely distributed in the aerogel composite and some are clumped together because the ratio of ceramic particles is very high. It can be confirmed that the aerogel particles are partially present between the ceramic particles and that sufficient bonding is not formed between the precursor and the aerogel particles.

### <Comparative Example 5>

Fluorine-based resin and aerogel particles were mixed in a solid state at a weight ratio of 2:1 to form an aerogel composite. PTFE was used as the fluorine-based resin, and silica aerogel particles were used as the aerogel particles. Mixing was performed at 3500 rpm using a household blender for 15 minutes.

FIG. 17 is an image of the mixture of fluorine-based resin and aerogel particle produced in Comparative Example 5.

Referring to FIG. 17, it can be confirmed that aggregates of fluorine-based resin were found in the area indicated by a circle, and a large number of such aggregates were formed, indicating that the fluorine-based resin and the aerogel were not mixed. As the aerogel composite was not formed, it was impossible to produce the thermal insulation layer and the heat resistant pad.

Referring to Example 1, Example 2, Comparative Example 1, Comparative Example 2, and Comparative Example 5 together, it was confirmed that when the weight ratio of the fluorine-based resin and the aerogel particles was adjusted to 1:1 or more and 1:1.5 or less during the solid-state mixing, a uniform web was formed between the fluorine-based resin and the aerogel particles, and pad formation was possible.

In addition, referring to Example 3, Comparative Example 3 and Comparative Example 4 together, it was confirmed that even if the ceramic particles, fluorine-based resin, and aerogel particles are mixed in two steps, it is difficult to form an aerogel composite and difficult to form a pad if the weight ratio of the ceramic particles, fluorine-based resin, and aerogel particles is outside the range of the present disclosure.

Referring to Examples 1 to 3, the method for producing a heat resistant pad of the present disclosure provides a method of mixing fluorine-based resin, aerogel particles, and optionally ceramic particles in a solid state, but mixing the fluorine-based resin: aerogel particles at a weight ratio of 1:1 or more and 1:1.5 or less to form an aerogel composite, and forming the formed aerogel composite into a sheet to form an insulating layer.

The method for producing a heat resistant pad of the present disclosure is performed by a dry process, which is superior in processability, and the heat resistant pad produced thereby can have superior thermal insulation properties. In addition, the heat resistant pad of one embodiment of the present disclosure can provide a heat resistant pad with further improved strength and flexibility by further including a step of forming a supporting layer on the thermal insulation layer.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

## Claims

1. A method for producing a heat resistant pad, comprising the steps of:
mixing a fluorine-based resin and an aerogel particle in a solid state at a weight ratio of 1:1 or more and 1:1.5 or less to form an aerogel composite; and
forming the aerogel composite into a sheet to form a thermal insulation layer.

2. The method for producing a heat resistant pad according to claim 1, wherein the forming an aerogel composite is performed in one step.

3. The method for producing a heat resistant pad according to claim 1, wherein the forming an aerogel composite comprises:
a first step of mixing a ceramic particle and the fluorine-based resin in a solid state to form a precursor; and
a second step of mixing the precursor and the aerogel particle in a solid state to form the aerogel composite.

4. The method for producing a heat resistant pad according to claim 3, wherein in the first step, a mixing weight ratio of the ceramic particle and the fluorine-based resin is 2:1 or more and 9:1 or less.

5. The method for producing a heat resistant pad according to claim 3, wherein the first step is a step of mixing the ceramic particle and the fluorine-based resin while applying a shear stress.

6. The method for producing a heat resistant pad according to claim 3, wherein the second step is a step of kneading and mixing the precursor and the aerogel particle.

7. The method for producing a heat resistant pad according to claim 3, wherein the ceramic particle comprises one or more selected from the group consisting of silicon oxide, a zirconium-based oxide, an yttrium-based oxide, aluminum oxide(Al₂O₃), boehmite, aluminum trihydrate, calcium oxide, a phosphate-based oxide, phosphorus pentoxide (P₂O₅), a glass fiber, a glass bubble, and a chopped glass.

8. The method for producing a heat resistant pad according to claim 1, wherein the fluorine-based resin comprises one or more selected from the group consisting of a polytetrafluoroethylene(PTFE) resin, a polyfluoroalkoxy(PFA) resin, and a polyvinylidene fluoride (PVDF) resin.

9. The method for producing a heat resistant pad according to claim 1, wherein the aerogel particle comprises a silica aerogel particle.

10. The method for producing a heat resistant pad according to claim 1, wherein the forming the aerogel composite into a sheet is pressing the aerogel composite.

11. The method for producing a heat resistant pad according to claim 1, wherein a thermal conductivity of the thermal insulation layer is 0.02 W/m·K or more and 0.1 W/m·K or less.

12. The method for producing a heat resistant pad according to claim 1, further comprising forming a supporting layer on at least one surface of the thermal insulation layer,
wherein the supporting layer comprises one or more selected from the group consisting of a silicone-based resin, an aramid fiber, a spun yarn, a mica pad, and a mica paper.

13. The method for producing a heat resistant pad according to claim 12, wherein the silicone-based resin is a silicone rubber.

14. An aerogel composite comprising a fluorine-based resin and an aerogel particle in a weight ratio of 1:1 or more and 1:1.5 or less.

15. The aerogel composite according to claim 14, wherein the aerogel particle comprises a silica aerogel particle.

16. The aerogel composite according to claim 14, wherein the fluorine-based resin comprise one or more selected from the group consisting of a polytetrafluoroethylene(PTFE) resin, a polyfluoroalkoxy(PFA) resin, and a polyvinylidene fluoride(PVDF) resin.

17. The aerogel composite according to claim 14, wherein the aerogel composite further comprises a ceramic particle.

18. The aerogel composite according to claim 17, wherein a mixing weight ratio of the ceramic particle and the fluorine-based resin is 2:1 or more and 9:1 or less.

19. The aerogel composite according to claim 17, wherein the ceramic particle comprises one or more selected from the group consisting of silicon oxide, a zirconium-based oxide, an yttrium-based oxide, aluminum oxide(Al₂O₃), boehmite, aluminum trihydrate, calcium oxide, a phosphate-based oxide, phosphorus pentoxide (P₂O₅), a glass fiber, a glass bubble, and a chopped glass.

20. A heat resistant pad comprising a thermal insulation layer comprising an aerogel composite as set forth in claim 14.
